# EUROPEAN PATENT SPECIFICATION

(11) **EP 3 935 943 B1**
(45) Date of publication and mention of the grant of the patent: **29.01.2025**
(21) Application number: 19919526.4
(22) Date of filing: 08.03.2019
(51) Int. Cl.: A01N 33/00, C05G 1/00, C05G 3/00, C05F 11/00, C12P 13/00, C05F 11/10, C05G 5/10, C05G 5/12, C05C 9/00

(54) **FERTILISER COMPOSITION THAT INCLUDES TYRAMINE AS AN ENHANCER OF NITROGEN THAT CAN BE ASSIMILATED BY PLANTS AND USE OF SAME**
DÜNGEMITTELZUSAMMENSETZUNG MIT TYRAMIN ALS VERSTÄRKER DES VON PFLANZEN ASSIMILIERBAREN STICKSTOFFS UND DEREN VERWENDUNG
COMPOSITION FERTILISANTE COMPRENANT DE LA TIRAMINE COMME ACTIVATEUR D'AZOTE ASSIMILABLE PAR LES PLANTES ET UTILISATION DE CELLE-CI

(43) Date of publication of application: 12.01.2022
(73) Proprietor: Fertinagro Biotech, S.L., 44195 Teruel (ES)
(72) Inventor: ATARES REAL, Sergio, 44195 Teruel (ES); ROMERO LOPEZ, Joaquin, 44195 Teruel (ES); SALAET MADORRAN, Ignasi, 44195 Teruel (ES); FERRER GINES, Maria, 44195 Teruel (ES); YANCE CHAVEZ, Tula Del Carmen, 44195 Teruel (ES); FUERTES DOÑATE, Carlos, 44195 Teruel (ES); CABALLERO MOLADA, Marcos, 44195 Teruel (ES)
(74) Representative: González López-Menchero, Álvaro Luis
(86) International application number: PCT/ES2019/000019
(87) International publication number: WO 2020/183033

(56) References cited:
- WO-A1-91/00008
- CA-A1- 2 034 506
- CN-A- 102 613 217
- CN-A- 102 613 217
- CN-A- 106 883 012
- PUBCHEM: "Tyramine | C8H11NO - PubChem", 16 September 2004 (2004-09-16), pages 1 - 2, XP055953233, Retrieved from the Internet <URL:https://pubchem.ncbi.nlm.nih.gov/compound/Tyramine> [retrieved on 20220819]

## Description

The present invention relates to a fertiliser composition that includes an enhancer of nitrogen that can be assimilated by plants, as well as to the use of said fertiliser composition.

More specifically, in a first aspect, the invention provides a fertiliser composition that includes tyramine as an enhancer of nitrogen that can be assimilated by plants, wherein tyramine improves the levels of total nitrogen in the plant and nitrate in the sap, its application constituting an alternative to conventional nitrogen fertilisers.

In a second aspect, the invention relates to a combination of the described fertiliser composition together with an additional fertiliser and/or biostimulant.

Nitrogen is the mineral nutrient required in the greatest quantities by agricultural crops and a key factor limiting their productivity. It is estimated that, globally, agricultural systems require between 150 and 200 million tonnes of nitrogen annually, of which more than 100 million tonnes are obtained industrially through the Haber Bosch process and between 50 and 70 million tonnes are fixed biologically (Unkovich et al., 2008, "Measuring plant-associated nitrogen fixation in agricultural systems", Australian Center for International Agricultural research, Canberra, Australia; Lu and Tian, 2017, "Global nitrogen and phosphorus fertilizer use for agriculture production in the past half century: shifted hot spots and nutrient imbalance", Earth Sys Sci Data. 9: 181-92). However, the production of traditional nitrogen fertilisers is energy-intensive and their application has a low efficiency and a considerable negative impact on the environment, mainly due to losses through leaching, denitrification, fixation in organic matter and volatilisation of ammonia (Tilman et al., 2002, "Agricultural sustainability and intensive production practices", Nature. 418: 671-7; Galloway et al., 2008, "Transformation of the nitrogen cycle: recent trends, questions, and potential solutions", Science. 320: 889-92).

It is also difficult to deliver nutrients to the plant in a controlled way and in accordance with the physiological requirements of the crops, often causing stress due to toxicity (increased salinity) or nutrient deficiency. Finally, given that 50-70% of the fertiliser applied is lost (Ladha et al., 2005, "Efficiency of Fertilizer Nitrogen in Cereal Production: Retrospects and Prospects", Advan Agron. 87: 85-156), the production costs for farmers increase significantly.

Consequently, the negative environmental impact associated with the excessive use of mineral nitrogen fertilisers has influenced the development of specific policies both in Spain and in the European Union, which promote the search for sustainable alternatives to traditional fertilisation and establish laws that regulate the maximum amount of fertiliser units that the farmer can apply depending on the degree of contamination existing in a specific region (this is the case in the region of Murcia, see BORM n.140, 18 June; and of the EU http://ec.europa.eu/environment/pubs/pdf/factsheets/nitrates/es.pdf).

In this sense, some solutions designed to solve the above-mentioned problems consist in the use of inhibitors of nitrification processes and urea hydrolysis (Qiao et al., 2015, "How inhibiting nitrification affects nitrogen cycle and reduces environmental impacts of anthropogenic nitrogen input", Glob Chang Biol. 21(3):1249-57; Lam et al, 2018, "Using urease and nitrification inhibitors to decrease ammonia and nitrous oxide emissions and improve productivity in a subtropical pasture", Sci Total Environ, DEC 10, 644:1531-1535) or in the application of inocula of nitrogen fixing bacteria (Gupta et al., 2012, "Endophytic Nitrogen-Fixing Bacteria as Biofertilizer", E. Lichtfouse (ed.), Sustainable Agriculture Reviews, 11, 183; Kumar et al., 2016, "Methylotrophic bacteria in sustainable agriculture", World J Microbiol Biotechnol. 32:120; PCT WO2013141815A1).

For this reason, there is currently a clear trend in the plant nutrition sector towards the search for alternatives to conventional nitrogen fertilisation that enable the reduction of pollution derived from its use while at the same time increasing the efficiency of nitrogen use and crop productivity in a sustainable way.

Furthermore, plants exude through the roots a considerable part of the organic compounds generated in photosynthesis (between 11 and 40%) in order to regulate the chemical composition of the rhizosphere and to promote the growth of those microorganisms that can provide benefits to the plant in a given ecosystem (Badri and Vivanco, 2009, "Regulation and function of root exudates", Plant, Cell and Environment 32, 666-681; Zhalnina et al, 2018, "Dynamic root exudate chemistry and microbial substrate preferences drive patterns in rhizosphere microbial community assembly", Nat Microbiol, 3(4):470-480). Compounds present in root exudates include sugars, amino acids, organic acids, fatty acids and secondary metabolites (Bais et al., 2006, "The role of root exudates in rhizosphere interactions with plants and other organisms", Annu Rev Plant Biol. 57:233-66). In addition to the cultivated species and its phenological stage, the composition and quantity of these exudates are mainly influenced by environmental signals, e.g. the availability of nutrients in the soil.

Indeed, root exudates can modify the composition of soil microbial communities and influence the dynamics of the nitrogen cycle, mainly through the regulation of nitrification and nitrogen fixation processes from the air (Sun et al., 2016, "Biological nitrification inhibition by rice root exudates and its relationship with nitrogen-use efficiency", New Phytol. 212(3):646-656; Coskun et al., 2017, "How Plant Root Exudates Shape the Nitrogen Cycle", Trends Plant Sci. 22(8):661-673).

In view of the above, the present invention builds on the above-mentioned approaches so that, on the one hand, by regulating the nitrogen transformation processes in soils, root exudates can increase the availability of nitrogen for plants and the efficiency of its use in agricultural soils and, on the other hand, it constitutes an alternative to the use of traditional nitrogen fertilisers.

Document CN106883012 provides a probiotic compound organic soil preparation method of a fertilizer, including the fertilizer 0.2-0.5 parts of tyramine in combination with urea, amino acids, biostimulants and other organic acids, wherein the main source of nitrogen in this composition is urea, and tyramine is present in very low levels. Document CA2034506 discloses a plant treatment composition in sight to act on their cell multiplication, their elongation and their vegetative, floral and gendered, which comprises, in association with an appropriate application vehicle, at least one amine capable of conjugating in situ with a phenol, in the presence of an enzyme which controls the biosynthesis of at least one of said amines in the plant, and in particular the biosynthesis of putrescine. This composition can include, among others, tyramine as amine and can be applied as a solution.

None of these prior documents discloses a fertiliser composition that includes tyramine as an enhancer of nitrogen that can be assimilated by plants, wherein tyramine improves the levels of total nitrogen in the plant and nitrate in the sap, its application constituting an alternative to conventional nitrogen fertilisers.

It would therefore be desirable to have fertilisers that mimic root exudates and have an analogous effect that can make it possible to dispense with or reduce the application of mineral fertilisers and mitigate environmental pollution and climate change, while providing an alternative to conventional nitrogen fertilisation to reduce pollution from its use and increase the efficiency of nitrogen use and crop productivity in a sustainable way.

The present invention fulfils both of the above objectives by providing a fertiliser composition that includes tyramine as an enhancer of nitrogen that can be assimilated by plants, wherein tyramine improves the levels of total nitrogen in the plant and nitrate in the sap.

Tyramine, or 4-(2-aminoethyl)phenol, is an amine derived from the amino acid tyrosine that occurs naturally in plant tissues. It is involved in plant defence against biotic stress, as it can act as a neurotransmitter and neuromodulator at specific insect and herbivore receptors (Servillo et al., 2017, "Tyramine Pathways in Citrus Plant Defense: Glycoconjugates of Tyramine and Its N-Methylated Derivatives", J Agric Food Chem, 1, 65(4):892-899). Biochemically, tyramine is produced by the decarboxylation of tyrosine via the action of the enzyme tyrosine decarboxylase, and is obtained in the form of a white crystalline powder with a purity of more than 99.5%.

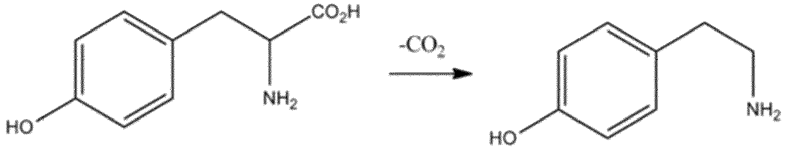

As mentioned above, in a first aspect, the present invention provides a fertiliser composition that includes tyramine as an enhancer of nitrogen that can be assimilated by plants.

The fertiliser composition of the invention comprises between 30 and 80% by weight of tyramine and between 5 and 30% by weight of other components selected from the group consisting of sugars, amino acids other than tyrosine, organic acids, polyamines, glycerol, myoinositol, adenine, uracil, cytosine, guanine and combinations thereof, the fertiliser composition being in the form of a water-soluble powder.

When present in the present fertiliser composition, sugars are preferably selected from mono- and di-saccharides such as sucrose, fructose, trehalose, glucose, arabinose, maltose, as well as mixtures thereof.

When present in the present fertiliser composition, amino acids other than tyramine are preferably selected from among threonine, lysine, phenylalanine, glutamic acid, methionine, GABA, ornithine, glycine, glutamine, aspartic acid, serine, asparagine, tyrosine, tryptophan, valine, leucine, isoleucine, proline, 4-hydroxyproline, arginine, histidine, alanine, cysteine, and mixtures thereof.

When present in the present fertiliser composition, the organic acids are preferably selected from lactic acid, succinic acid, oxalic acid, gluconic acid, threonic acid, fumaric acid and mixtures thereof.

Polyamines, if present in the present composition, are preferably selected from putrescine, spermidine, spermine and mixtures thereof.

The presence of these components other than tyramine in the composition of the invention is based on the fact that such components form part of the root exudates in the crops tested in the absence of nitrogen described below or are described in the literature as components of said exudates in normal conditions for plant development (Zhalnina et al., 2018), and are therefore desirable for the aforementioned purpose of having a fertiliser composition that mimics the root exudates with a similar effect, that can make it possible to dispense with or reduce the application of mineral fertilisers.

The fertiliser composition of the invention is formulated in the form of a water-soluble powder, as indicated above, but can also be formulated in the form of a liquid composition by dissolving it in water or in the form of granules by adding granulating agents known to the person skilled in the art.

According to the second aspect, the invention relates to a fertiliser composition as described above in combination with another additional fertiliser selected from nitrogen fertilisers, phosphate fertilisers, potassium fertilisers, calcium fertilisers and amendments, micronutrients, boric acid and leonardite, and combinations thereof, and/or in combination with one or more biostimulants selected from the group consisting of amino acid hydrolysates, humic extracts, algae extracts, live micro-organisms or extracts of micro-organisms, e.g. *Pichia guilliermondii* and *Azotobacter chroococcum,* and combinations thereof.

In this case, the composition of the invention is present in the combination in a proportion of 0.5 to 10% by weight.

In one embodiment, the additional nitrogen fertiliser is present in the combination in a proportion of 5 to 90% by weight and is selected from urea, ammonium nitrosulphate, potassium nitrate, ammonium sulphate, ammonium nitrate, calcium nitrate.

In another embodiment, the additional phosphate fertiliser is present in the combination in a proportion of 5 to 90% by weight and is selected from phosphate rock, triple superphosphate, single superphosphate, concentrated superphosphate, phosphoric acid.

In yet another embodiment, the additional potassium fertiliser is present in the combination in a proportion of 5 to 90% by weight and is selected from potassium chloride, potassium sulphate, potassium and magnesium double sulphate, potassium hydroxide.

In another embodiment, the additional calcium fertiliser is present in the combination in a proportion of 5 to 90% by weight and is selected from calcium chloride, calcium cyanamide, calcium sulphate, dolomite, limestone, calcium oxide, calcium hydroxide.

In yet another embodiment, the additional micronutrient fertiliser is present in the combination in a proportion of 1 to 30% by weight and is selected from iron sulphate, magnesium sulphate, zinc sulphate, manganese sulphate, copper sulphate, ammonium molybdate, cobalt chloride.

In a further embodiment, boric acid as an additional fertiliser is present in the combination in a proportion of 1 to 30% by weight.

In another embodiment, leonardite as an additional fertiliser is present in the combination in a proportion of 5 to 90% by weight.

In the case of the combination of the fertiliser composition of the invention with biostimulants as described above, preferably the biostimulants are present in the combination in a proportion of 5 to 90% by weight.

It is also the object of the invention to use the fertiliser compositions described here in the form of water-soluble powder, granulates or a liquid pre-dissolved in water for application by fertigation or foliar application.

If the composition of the invention is used in the form of a water-soluble powder by fertigation or by foliar application pre-dissolved in water, it is preferably applied in an amount of 0.5 to 20 kg/ha and 0.06 to 1 kg/ha respectively.

If the composition of the invention is used in combination with another additional fertiliser in the form of granules, preferably said combination is applied directly in an amount of 75 to 1,500 kg/ha.

If the composition of the invention is used in combination with biostimulants in the form of a liquid for the application thereof by fertigation or foliar application, it is preferably applied in an amount of 0.5 to 20 kg/ha and 0.06 to 1 kg/ha respectively.

### Examples

### 1. Trial to obtain and identify root exudates in the absence of nitrogen.

In order to characterise in detail the response of crops to nitrogen deficiency and to identify the metabolites exuded by roots that have the greatest influence on nitrogen dynamics in the soil, the Applicant analysed the differential exudate profile of two crop species of agronomic interest, maize and tomato, in the absence of nitrogen. The following is a brief description of the trial to determine the root exudates emitted in the absence of nitrogen.

The method, similar to that used by other authors (Naveed et al., 2017, "Plant exudates may stabilize or weaken soil depending on species, origin and time", European Journal of Soil Science) was the same for both maize seeds (variety LG 34.90) and tomato seeds (variety Agora Hybrid F1). The seeds were surface sterilised by washing for 5 minutes in 96% ethanol, followed by 10 minutes in 5% bleach. The seeds were then washed extensively and allowed to hydrate in sterile MilliQ water for 4 hours. For germination, the seeds were placed on a bed of filter paper moistened with sterile MilliQ water. The seeds were left to germinate in darkness for 4 days, after which the seedlings were placed in hydroponic culture trays with the roots immersed in standard Hoagland nutrient solution. Twelve plants were placed in each tray, with three trays (each corresponding to a biological replicate) for the control treatment and three trays for the nitrogen-free treatment. The plants were grown at a temperature and photoperiod of 25 °C and 16 h light/22 °C and 8 h darkness and a light intensity of 4,000 lux on the surface.

The nutrient solution was replaced with fresh solution every three days and kept aerated at all times by bubbler probes. After 10 days of growth, the plants were subjected to nitrogen depletion treatment. For this, three trays were incubated for three days with modified Hoagland solution without nitrogen and the remaining three trays were incubated with full solution. After incubation, root exudates were obtained.

The plants were carefully removed from the culture trays and washed with plenty of water, followed by a final wash with distilled water. Plants corresponding to each tray were placed in wide-necked flasks containing 200 ml of MilliQ water, the roots being immersed in the water. The plants were incubated in the flasks for 6 hours. Subsequently, the plants were removed and the insoluble material was removed from the solution by filtering with 0.20 µm filters. The filtered material was flash-frozen in liquid nitrogen and freeze-dried. The dried material obtained was weighed and analysed by gas-mass chromatography after derivatisation with methoxyamine and N-methyl-(trimethylsilyltrifluoroacetamide).

Table 1 shows the metabolites exuded by the plants and their ratios under nitrogen-free versus control conditions.

**Table 1**

| Increase of metabolites emitted in the absence of nitrogen, N/N Ratio | | | |
|---|---|---|---|
| Maize | | Tomato | |
| Threonine | 7.50 | Lysine | 6.66 |
| Lysine | 3.56 | Glutamic acid | 4.94 |
| Lactic acid | 3.44 | Sucrose | 4.78 |
| Sucrose | 3.05 | Lactic acid | 4.65 |
| Phenylalanine | 2.77 | Urea | 4.24 |
| Glutamic acid | 2.37 | Phenylalanine | 4.12 |
| Tyramine | 2.34 | Oxalic acid | 3.34 |
| Methionine | 2.28 | Tyramine | 3.04 |
| GABA | 2.24 | Proline | 2.92 |
| Succinic acid | 2.18 | Leucine | 2.81 |
| Oxalic acid | 1.98 | Isoleucine | 2.55 |
| Trehalose | 1.92 | Fructose | 2.10 |
| Urea | 1.85 | Glycine | 2.09 |
| Glyceric acid | 1.71 | Ornithine | 1.85 |
| Uracil | 1.67 | Serine | 1.57 |
| Fructose | 1.67 | Glycerol | 1.51 |
| Ornithine | 1.66 | Uracil | 1.45 |
| Glycine | 1.56 | | |
| Glycerol | 1.45 | | |

Based on these results, 7 matching metabolites with a ratio to the control greater than 2 and which were present in the exudates of both cultures were selected. These metabolites were: lysine, glutamic acid, sucrose, lactic acid, urea, oxalic acid and tyramine. Each of the metabolites was applied separately at a dose of 1 kg/ha in a pot with 3 kg of soil, maize plants were planted (4 pots per treatment with one plant per pot) and the effect on their dry weight was observed after 6 weeks. The effect of the metabolites was compared with a negative control (no treatment) and a positive control with a conventional nitrogen fertiliser (ammonium nitrosulphate at a dose of 300 nitrogen fertiliser units per hectare). The soil came from an agricultural soil that had been left unfertilised and uncultivated for one year, conditions under which the availability of the forms directly assimilable by plants (NH₄⁺ and NO₃⁻) is generally low (Kiba and Krapp, 2016, "Plant Nitrogen Acquisition Under Low Availability: Regulation of Uptake and Root Architecture", Plant Cell Physiol, 57(4):707-14). All metabolites enhanced maize growth, as shown in Table 2 below.

**Table 2**

| Dry biomass of maize plants at 6 weeks of growth | | |
|---|---|---|
| Compound | Dry weight (g) | Standard error |
| Control | 1.06 | ±0.02 |
| Lysine | 1.27 | ±0.04 |
| Glutamic acid | 1.65 | ±0.06 |
| Sucrose | 1.69 | ±0.05 |
| Lactic acid | 1.44 | ±0.04 |
| Urea | 1.50 | ±0.02 |
| Oxalic acid | 1.38 | ±0.03 |
| Tyramine | 1.82 | ±0.04 |
| Ammonium nitrosulphate | 1.78 | ±0.05 |

The above results indicate that tyramine is the most growth-enhancing metabolite in maize, achieving the same result as conventional nitrogen treatment with ammonium nitrosulphate.

### 2. Application of the fertiliser composition and combination of the invention

Three fertiliser compositions in the form of a water-soluble powder were prepared according to the invention with the following composition:
A: 100 % by weight of tyramine (comparative)
B: a combination of 30-80% by weight tyramine and 5-30% sucrose, 5-30% glutamic acid and 5-30% urea;
C: a combination of 30-80% by weight tyramine and 5-30% oxalic acid, 5-30% lactic acid and 5-30% lysine

These products (A, B, C) were tested in field trials on maize and tomato plants and compared with a negative control (no treatment) and a positive control of conventional nitrogen fertilisation consisting of ammonium nitrosulphate (D). The rates and mode of application were as follows:
- For maize:
   - A: 7.6 kg/ha via fertigation.
   - B: 7.6 kg/ha via fertigation.
   - C: 7.6 kg/ha via fertigation.
   - D: Ammonium nitrosulphate: 300 nitrogen fertiliser units per hectare
- For tomato:
   - A: 5.0 kg/ha via fertigation.
   - B: 5.0 kg/ha via fertigation.
   - C: 5.0 kg/ha via fertigation.
   - D: Ammonium nitrosulphate: 230 nitrogen fertiliser units per hectare

The treatments significantly improved yield and nitrogen content of maize (Tables 3 and 4) as well as tomato (Tables 5 and 6).

**Table 3**

| Maize yield (Tn grain/ha) | |
|---|---|
| Control | 8.61 |
| A | 10.33 |
| B | 11.13 |
| C | 10.98 |
| D | 11.11 |

**Table 4**

| Nitrogen concentration in maize | | |
|---|---|---|
| | % total N in plant | NO3⁻ in sap (mg/l) |
| Control | 1.41 | 564 |
| A | 1.57 | 599 |
| B | 1.64 | 636 |
| C | 1.62 | 611 |
| D | 1.65 | 639 |

**Table 5**

| Tomato yield (Tn grain/ha) | |
|---|---|
| Control | 51.4 |
| A | 58.2 |
| B | 63.4 |
| C | 61.7 |
| D | 62.8 |

**Table 6**

| Nitrogen concentration in tomato (2nd bunch) | | |
|---|---|---|
| | % total N in plant | NO3⁻ in sap (mg/l) |
| Control | 0.84 | 924 |
| A | 1.33 | 1014 |
| B | 1.55 | 1153 |
| C | 1.48 | 1067 |
| D | 1.51 | 1098 |

In order to determine whether the increase in nitrogen and nitrate content in the sap in the treatments studied is due to an increase in the availability of assimilable nitrogen for the plants, nitrogen balances were carried out in trials with maize and tomato plants.

The analysis of the soil used for the trials determined that it contained 7.4 ppm of mineral nitrogen (NH₄⁺ and NO₃⁻), which corresponds to 29 kg/ha (considering 30 centimetres of arable soil and an average density of 1,300 kg/m3, the mass per hectare would be approximately 3,900 tonnes). The total nitrogen content of the soil was also determined to be 0.15%, which corresponds to 5,850 kg/ha, of which 5,831 kg/ha is organic nitrogen, not available to the plants.

Among treatments A, B and C, the treatment that provides the highest amount of nitrogen fertiliser units would be treatment B in the following combination: 35% tyramine, 5% sucrose, 30% glutamic acid and 30% urea. The nitrogen content of this mixture would be 20.22%, which would mean a maximum application of nitrogen fertiliser units through the treatments described here of 15.4 kg/ha in the case of maize and 10.1 kg/ha in the case of tomato.

Taking into account the dry weight of the biomass of the maize and tomato plants (see Tables 7 and 8) and the percentage of total nitrogen in the plants (Tables 4 and 6), the kg of nitrogen present in the biomass obtained per hectare can be calculated. As can be seen, the amount of nitrogen in the dry biomass is much higher in all cases than the sum of nitrogen available in the soil and that provided by the fertiliser treatments proposed here. Therefore, the increase in nitrogen content of the plants is necessarily due to an increase in the availability of nitrogen that can be assimilated for the plants thanks to the fertiliser composition with enhancer of nitrogen that can be assimilated.

**Table 7**

| Nitrogen balance in maize plant | | |
|---|---|---|
| | Biomass dry weight (Tn/ha) | Kg of N in dry biomass/ha |
| Control | 9.02 | 127.18 |
| A | 10.74 | 168.62 |
| B | 10.96 | 179.74 |
| C | 10.80 | 174.96 |
| D | 11.26 | 185.79 |

**Table 8**

| Nitrogen balance in tomato plant, 2nd bunch | | |
|---|---|---|
| | Biomass dry weight (Tn/ha) | kg of N in dry biomass/ha |
| Control | 5.2 | 43.7 |
| A | 6.3 | 83.8 |
| B | 6.8 | 105.4 |
| C | 6.5 | 96.2 |
| D | 6.7 | 101.2 |

## Claims

1. A fertiliser composition comprising an enhancer of nitrogen that can be assimilated by plants, **characterised in that** it comprises 30 to 80% by weight of tyramine and 5 to 30% by weight of other components selected from the group consisting of sugars, amino acids other than tyrosine, organic acids, polyamines, glycerol, myoinositol, adenine, uracil, cytosine, guanine and combinations thereof, the fertiliser composition being in the form of a water-soluble powder.

2. The fertiliser composition according to claim 1, **characterised in that** the sugars are preferably selected from sucrose, fructose, trehalose, glucose, arabinose, maltose, as well as mixtures thereof.

3. The fertiliser composition according to claim 1, **characterised in that** the amino acids other than tyramine are selected from among threonine, lysine, phenylalanine, glutamic acid, methionine, GABA, ornithine, glycine, glutamine, aspartic acid, serine, asparagine, tyrosine, tryptophan, valine, leucine, isoleucine, proline, 4-hydroxyproline, arginine, histidine, alanine, cysteine, and mixtures thereof.

4. The fertiliser composition according to claim 1, **characterised in that** the organic acids are selected from lactic acid, succinic acid, oxalic acid, gluconic acid, threonic acid, fumaric acid and mixtures thereof.

5. The fertiliser composition according to claim 1, **characterised in that** the polyamines are selected from putrescine, spermidine, spermine and mixtures thereof.

6. A combination of the fertiliser composition according to any of claims 1 to 5 with an additional fertiliser selected from nitrogen fertilisers, phosphate fertilisers, potassium fertilisers, calcium fertilisers and amendments, micronutrients, boric acid and leonardite, as well as combinations thereof.

7. The combination according to claim 6, **characterised in that** the fertiliser composition according to any one of claims 1 to 5 is present in the combination in a proportion of 0.5 to 10% by weight.

8. The combination according to claims 6-7, **characterised in that** the additional nitrogen fertiliser is present in the combination in a proportion of 5 to 90% by weight and is selected from urea, ammonium nitrosulphate, potassium nitrate, ammonium sulphate, ammonium nitrate, calcium nitrate.

9. The combination according to claims 6-7, **characterised in that** the additional phosphate fertiliser is present in the combination in a proportion of 5 to 90% by weight and is selected from phosphate rock, triple superphosphate, single superphosphate, concentrated superphosphate, phosphoric acid.

10. The combination according to claims 6-7, **characterised in that** the additional potassium fertiliser is present in the combination in a proportion of 5 to 90% by weight and is selected from potassium chloride, potassium sulphate, potassium and magnesium double sulphate, potassium hydroxide.

11. The combination according to claims 6-7, **characterised in that** the additional calcium fertiliser is present in the combination in a proportion of 5 to 90% by weight and is selected from calcium chloride, calcium cyanamide, calcium sulphate, dolomite, limestone, calcium oxide, calcium hydroxide.

12. The combination according to claims 6-7, **characterised in that** the additional micronutrient fertiliser is present in the combination in a proportion of 1 to 30% by weight and is selected from iron sulphate, magnesium sulphate, zinc sulphate, manganese sulphate, copper sulphate, ammonium molybdate, cobalt chloride.

13. The combination according to claims 6-7, **characterised in that** boric acid as an additional fertiliser is present in the combination in a proportion of 1 to 30% by weight.

14. The combination according to claims 6-7, **characterised in that** leonardite as an additional fertiliser is present in the combination in a proportion of 5 to 90% by weight.

15. The combination of the fertiliser composition according to any of claims 1 to 5 with one or more biostimulants selected from the group consisting of amino acid hydrolysates, humic extracts, algae extracts, live micro-organisms or extracts of micro-organisms and combinations thereof.

16. The combination according to claim 15, **characterised in that** the biostimulants are present in the combination in a proportion of 5 to 90% by weight.

17. A use of the fertiliser composition according to claims 1 to 5 in the form of a water-soluble powder, granules or a liquid pre-dissolved in water for application by fertigation or foliar application.

18. The use of the combination according to claims 6 to 16, in the form of a water-soluble powder, granules or a liquid pre-dissolved in water for application by fertigation or foliar application.

19. The use according to claim 18, **characterised in that** it is applied directly in an amount of 75 to 1,500 kg/ha in the form of granules.

20. The use according to claim 18, **characterised in that** it is applied by fertigation or foliar application in an amount of 0.5 to 20 kg/ha and 0.06 to 1 kg/ha respectively.

## Patentansprüche

1. Düngemittelzusammensetzung, die einen Stickstoffverstärker umfasst, der von Pflanzen assimiliert werden kann, **dadurch gekennzeichnet, dass** sie zu 30 bis 80 Gew.-% Tyramin und zu 5 bis 30 Gew.-% andere Komponenten umfasst, die aus der Gruppe ausgewählt sind, die aus Zuckern, anderen Aminosäuren als Tyrosin, organischen Säuren, Polyaminen, Glycerin, Myoinositol, Adenin, Uracil, Cytosin, Guanin und Kombinationen davon besteht, wobei die Düngemittelzusammensetzung in Form eines wasserlöslichen Pulvers vorliegt.

2. Düngemittelzusammensetzung nach Anspruch 1, **dadurch gekennzeichnet, dass** die Zucker vorzugsweise aus Saccharose, Fructose, Trehalose, Glucose, Arabinose, Maltose sowie Mischungen davon ausgewählt sind.

3. Düngemittelzusammensetzung nach Anspruch 1, **dadurch gekennzeichnet, dass** die anderen Aminosäuren als Tyramin aus Threonin, Lysin, Phenylalanin, Glutaminsäure, Methionin, GABA, Ornithin, Glycin, Glutamin, Asparaginsäure, Serin, Asparagin, Tyrosin, Tryptophan, Valin, Leucin, Isoleucin, Prolin, 4-Hydroxyprolin, Arginin, Histidin, Alanin, Cystein sowie Mischungen davon ausgewählt sind.

4. Düngemittelzusammensetzung nach Anspruch 1, **dadurch gekennzeichnet, dass** die organischen Säuren aus Milchsäure, Bernsteinsäure, Oxalsäure, Gluconsäure, Threonsäure, Fumarsäure sowie Mischungen davon ausgewählt sind.

5. Düngemittelzusammensetzung nach Anspruch 1, **dadurch gekennzeichnet, dass** die Polyamine aus Putrescin, Spermidin, Spermin sowie Mischungen davon ausgewählt sind.

6. Kombination der Düngemittelzusammensetzung nach einem der Ansprüche 1 bis 5 mit einem zusätzlichen Düngemittel, das aus Stickstoffdüngemitteln, Phosphatdüngemitteln, Kaliumdüngemitteln, Calciumdüngemitteln und -zusätzen, Mikronährstoffen, Borsäure und Leonardit sowie Kombinationen davon ausgewählt ist.

7. Kombination nach Anspruch 6, **dadurch gekennzeichnet, dass** die Düngemittelzusammensetzung nach einem der Ansprüche 1 bis 5 in der Kombination in einem Anteil von 0,5 bis 10 Gew.-% vorhanden ist.

8. Kombination nach den Ansprüchen 6-7, **dadurch gekennzeichnet, dass** das zusätzliche Stickstoffdüngemittel in der Kombination in einem Anteil von 5 bis 90 Gew.-% vorhanden ist und aus Harnstoff, Ammoniumnitrosulfat, Kaliumnitrat, Ammoniumsulfat, Ammoniumnitrat, Calciumnitrat ausgewählt ist.

9. Kombination nach den Ansprüchen 6-7, **dadurch gekennzeichnet, dass** das zusätzliche Phosphatdüngemittel in der Kombination in einem Anteil von 5 bis 90 Gew.-% vorhanden ist und aus Phosphatgestein, Triple-Superphosphat, Single-Superphosphat, konzentriertem Superphosphat und Phosphorsäure ausgewählt ist.

10. Kombination nach den Ansprüchen 6-7, **dadurch gekennzeichnet, dass** das zusätzliche Kaliumdüngemittel in der Kombination in einem Anteil von 5 bis 90 Gew.-% vorhanden ist und aus Kaliumchlorid, Kaliumsulfat, Kalium- und Magnesium-Double-Sulfat, Kaliumhydroxid ausgewählt ist.

11. Kombination nach den Ansprüchen 6-7, **dadurch gekennzeichnet, dass** das zusätzliche Calciumdüngemittel in der Kombination in einem Anteil von 5 bis 90 Gew.-% vorhanden ist und aus Calciumchlorid, Calciumcyanamid, Calciumsulfat, Dolomit, Kalkstein, Calciumoxid, Calciumhydroxid ausgewählt ist.

12. Kombination nach den Ansprüchen 6-7, **dadurch gekennzeichnet, dass** das zusätzliche Mikronährstoffdüngemittel in der Kombination in einem Anteil von 1 bis 30 Gew.-% vorhanden ist und aus Eisensulfat, Magnesiumsulfat, Zinksulfat, Mangansulfat, Kupfersulfat, Ammoniummolybdat, Kobaltchlorid ausgewählt ist.

13. Kombination nach den Ansprüchen 6-7, **dadurch gekennzeichnet, dass** Borsäure als zusätzliches Düngemittel in der Kombination in einem Anteil von 1 bis 30 Gew.-% vorhanden ist.

14. Kombination nach den Ansprüchen 6-7, **dadurch gekennzeichnet, dass** Leonardit als zusätzliches Düngemittel in der Kombination in einem Anteil von 5 bis 90 Gew.-% vorhanden ist.

15. Kombination der Düngemittelzusammensetzung nach einem der Ansprüche 1 bis 5 mit einem oder mehreren Biostimulanzien, die aus der Gruppe ausgewählt sind, die aus Aminosäurehydrolysaten, Huminextrakten, Algenextrakten, lebenden Mikroorganismen oder Extrakten von Mikroorganismen sowie Kombinationen davon besteht.

16. Kombination nach Anspruch 15, **dadurch gekennzeichnet, dass** die Biostimulanzien in der Kombination in einem Anteil von 5 bis 90 Gew.-% vorhanden sind.

17. Verwendung der Düngemittelzusammensetzung nach den Ansprüchen 1 bis 5 in Form eines wasserlöslichen Pulvers, eines Granulats oder einer in Wasser vorab gelösten Flüssigkeit zur Ausbringung durch Fertigation oder Blattanwendung.

18. Verwendung der Kombination nach den Ansprüchen 6 bis 16 in Form eines wasserlöslichen Pulvers, eines Granulats oder einer in Wasser vorab gelösten Flüssigkeit zur Ausbringung durch Fertigation oder Blattanwendung.

19. Verwendung nach Anspruch 18, **dadurch gekennzeichnet, dass** sie direkt in einer Menge von 75 bis 1.500 kg/ha in Form eines Granulats ausgebracht wird.

20. Verwendung nach Anspruch 18, **dadurch gekennzeichnet, dass** sie durch Fertigation oder Blattanwendung in einer Menge von 0,5 bis 20 kg/ha bzw. 0,06 bis 1 kg/ha ausgebracht wird.

## Revendications

1. Composition d'engrais comprenant un activateur d'azote qui peut être assimilé par des plantes, **caractérisée en ce qu'**elle comprend 30 à 80 % en poids de tyramine et 5 à 30 % en poids d'autres composants choisis dans le groupe constitué par les sucres, les acides aminés autres que la tyrosine, les acides organiques, les polyamines, le glycérol, le myo-inositol, l'adénine, l'uracile, la cytosine, la guanine et les combinaisons de ceux-ci, la composition d'engrais étant sous la forme d'une poudre soluble dans l'eau.

2. Composition d'engrais selon la revendication 1, **caractérisée en ce que** les sucres sont de préférence choisis parmi le saccharose, le fructose, le tréhalose, le glucose, l'arabinose, le maltose, ainsi que les mélanges de ceux-ci.

3. Composition d'engrais selon la revendication 1, **caractérisée en ce que** les acides aminés autres que la tyramine sont choisis parmi la thréonine, la lysine, la phénylalanine, l'acide glutamique, la méthionine, le GABA, l'ornithine, la glycine, la glutamine, l'acide aspartique, la sérine, l'asparagine, la tyrosine, le tryptophane, la valine, la leucine, l'isoleucine, la proline, la 4-hydroxyproline, l'arginine, l'histidine, l'alanine, la cystéine et les mélanges de ceux-ci.

4. Composition d'engrais selon la revendication 1, **caractérisée en ce que** les acides organiques sont choisis parmi l'acide lactique, l'acide succinique, l'acide oxalique, l'acide gluconique, l'acide thréonique, l'acide fumarique et les mélanges de ceux-ci.

5. Composition d'engrais selon la revendication 1, **caractérisée en ce que** les polyamines sont choisies parmi la putrescine, la spermidine, la spermine et les mélanges de celles-ci.

6. Combinaison de la composition d'engrais selon l'une quelconque des revendications 1 à 5 avec un engrais supplémentaire choisi parmi les engrais azotés, les engrais phosphatés, les engrais potassiques, les engrais et amendements calciques, les micronutriments, l'acide borique et la léonardite, ainsi que les combinaisons de ceux-ci.

7. Combinaison selon la revendication 6, **caractérisée en ce que** la composition d'engrais selon l'une quelconque des revendications 1 à 5 est présente dans la combinaison en une proportion de 0,5 à 10 % en poids.

8. Combinaison selon les revendications 6 à 7, **caractérisée en ce que** l'engrais azoté supplémentaire est présent dans la combinaison en une proportion de 5 à 90 % en poids et est choisi parmi l'urée, le nitrosulfate d'ammonium, le nitrate de potassium, le sulfate d'ammonium, le nitrate d'ammonium, le nitrate de calcium.

9. Combinaison selon les revendications 6 à 7, **caractérisée en ce que** l'engrais phosphaté supplémentaire est présent dans la combinaison en une proportion de 5 à 90 % en poids et est choisi parmi la roche phosphatée, le superphosphate triple, le superphosphate simple, le superphosphate concentré, l'acide phosphorique.

10. Combinaison selon les revendications 6 à 7, **caractérisée en ce que** l'engrais potassique supplémentaire est présent dans la combinaison en une proportion de 5 à 90 % en poids et est choisi parmi le chlorure de potassium, le sulfate de potassium, le sulfate double de magnésium et de potassium, l'hydroxyde de potassium.

11. Combinaison selon les revendications 6 à 7, **caractérisée en ce que** l'engrais calcique supplémentaire est présent dans la combinaison en une proportion de 5 à 90 % en poids et est choisi parmi le chlorure de calcium, le cyanamide calcique, le sulfate de calcium, la dolomie, le calcaire, l'oxyde de calcium, l'hydroxyde de calcium.

12. Combinaison selon les revendications 6 à 7, **caractérisée en ce que** l'engrais de type micronutriment supplémentaire est présent dans la combinaison en une proportion de 1 à 30 % en poids et est choisi parmi le sulfate de fer, le sulfate de magnésium, le sulfate de zinc, le sulfate de manganèse, le sulfate de cuivre, le molybdate d'ammonium, le chlorure de cobalt.

13. Combinaison selon les revendications 6 à 7, **caractérisée en ce que** l'acide borique en tant qu'engrais supplémentaire est présent dans la combinaison en une proportion de 1 à 30 % en poids.

14. Combinaison selon les revendications 6 à 7, **caractérisée en ce que** la léonardite en tant qu'engrais supplémentaire est présente dans la combinaison en une proportion de 5 à 90 % en poids.

15. Combinaison de la composition d'engrais selon l'une quelconque des revendications 1 à 5 avec un ou plusieurs biostimulants choisis dans le groupe constitué par les hydrolysats d'acides aminés, les extraits humiques, les extraits d'algues, les micro-organismes vivants ou les extraits de micro-organismes et les combinaisons de ceux-ci.

16. Combinaison selon la revendication 15, **caractérisée en ce que** les biostimulants sont présents dans la combinaison en une proportion de 5 à 90 % en poids.

17. Utilisation de la composition d'engrais selon les revendications 1 à 5 sous la forme d'une poudre soluble dans l'eau, de granulés ou de liquide pré-dissous dans de l'eau pour application par fertirrigation ou application foliaire.

18. Utilisation de la combinaison selon les revendications 6 à 16, sous la forme d'une poudre soluble dans l'eau, de granulés ou de liquide pré-dissous dans de l'eau pour application par fertirrigation ou application foliaire.

19. Utilisation selon la revendication 18, **caractérisée en ce qu'**elle est appliquée directement en une quantité de 75 à 1 500 kg/ha sous la forme de granulés.

20. Utilisation selon la revendication 18, **caractérisée en ce qu'**elle est appliquée par fertirrigation ou application foliaire en une quantité de 0,5 à 20 kg/ha et de 0,06 à 1 kg/ha respectivement.
